(19)

Europäisches
Patentamt
European
Patent Office
Office européen
des brevets

(11) **EP 3 267 292 A1**

(12) **EUROPEAN PATENT APPLICATION**

(43) Date of publication:
**10.01.2018 Bulletin 2018/02**

(51) Int Cl.:
**G06F 3/01** *(2006.01)*  **G06F 3/044** *(2006.01)*
**H04W 4/00** *(2018.01)*  **G06F 3/041** *(2006.01)*

(21) Application number: **17181805.7**

(22) Date of filing: **30.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2013 US 201361922129 P**

(62) Document number(s) of the earlier application(s) in accordance with Art. 76 EPC:
**14859328.8 / 3 090 320**

(71) Applicant: **MediaTek Inc.**
**Hsin-Chu 300 (TW)**

(72) Inventors:
• LEE, Tzu-Yu
**New Taipei City (TW)**
• CHIANG, Tsung-Yueh
**Taichung City (TW)**

(74) Representative: **Hoefer & Partner Patentanwälte mbB**
**Pilgersheimer Straße 20**
**81543 München (DE)**

Remarks:
This application was filed on 18-07-2017 as a divisional application to the application mentioned under INID code 62.

(54) **TOUCH COMMUNICATIONS DEVICE FOR DETECTING RELATIVE MOVEMENT STATUS OF OBJECT CLOSE TO, OR IN CONTACT WITH, TOUCH PANEL AND RELATED MOVEMENT DETECTION METHOD**

(57)    A touch communications device has a touch panel and a processing circuit. The touch panel allows a communications connection to be established through the touch panel. The touch panel is further used to sense an object that is close to, or in contact with, the touch panel to generate a sensing output. The processing circuit is coupled to the touch panel for performing touch communications control. The processing circuit is further used to detect at least one relative movement status of the object according to the sensing output generated from the touch panel.

**FIG. 6**

**Description**

CROSS REFERENCE TO RELATED APPLICATIONS

This application claims the benefit of U.S. provisional application No. 61/922,129, filed on 12/31/2013 and incorporated herein by reference.

FIELD OF INVENTION

The present invention relates to touch communications technologies, and more particularly, to a touch communications device for detecting a relative movement status of an object (e.g., another touch communications device) that is close to, or in contact with, a touch panel of the touch communications device and a related movement detection method.

BACKGROUND OF THE INVENTION

According to the related art, Near Field Communication (NFC) can be regarded as a contactless identification and interaction technology, and can be used for performing short distance wireless communications between mobile devices, consumer electronic products, personal computers, and/or intelligent electronic devices through a method of near field magnetic coupling (e.g. using the frequency of 13. 56 MHz). The users of NFC devices can intuitively exchange information and acquire contents and services with ease.

As the market for portable electronic devices such as mobile phones equipped with NFC functionalities has become mature, they can be used for supporting mobile payment or point of sale (POS). However, as the NFC devices are designed to transmit and receive signals through magnetic coupling, it is typical to implement an inductive card reader or some components having similar functionalities in the aforementioned portable electronic devices such as the mobile phones mentioned above, which may cause the sizes of the portable electronic devices to be increased, and further cause the layouts, the structure arrangement, and the materials of components in the portable electronic devices such as the mobile phones to be limited.

Therefore, some touch communications technologies regarding touch panel devices (e.g. electronic device equipped with touch panels), such as those described in the U.S. Patent Application Publication No. 2011/0304583, the U.S. Patent Application Publication No. US 2013/0147760, the China Patent Application Publication No. CN 102916729 A, are proposed recently, where the touch panels and the driving integrated circuit (IC) in the touch panel devices can be used for performing communications and data transmission. For example, a conventional touch panel device may comprise a touch sensor. In addition, at least one portion of the touch sensor can be at least one portion of the touch panel in the conventional touch panel device, where the touch panel can be a touch panel that does not have the display functionality (e.g. a touch pad), or a touch panel that has the display functionality (e.g. a touch screen). The touch sensor may comprise multiple driving electrodes and sensing electrodes installed on substrates, such as the driving electrodes and the sensing electrodes for forming capacitor structures. At least one of the driving electrodes and the sensing electrodes can be used as transmitting electrodes, and at least one of the driving electrodes and the sensing electrodes can be used as receiving electrodes. Thus, the signals can be transmitted or received by using the electrodes and the driving IC in the conventional touch panel device, to realize touch communications based on electric fields, having no need to implement any inductive card reader or some components having similar functionalities in the conventional touch panel device, where this architecture can significantly reduce the size and save the costs, in comparison with the NFC technology.

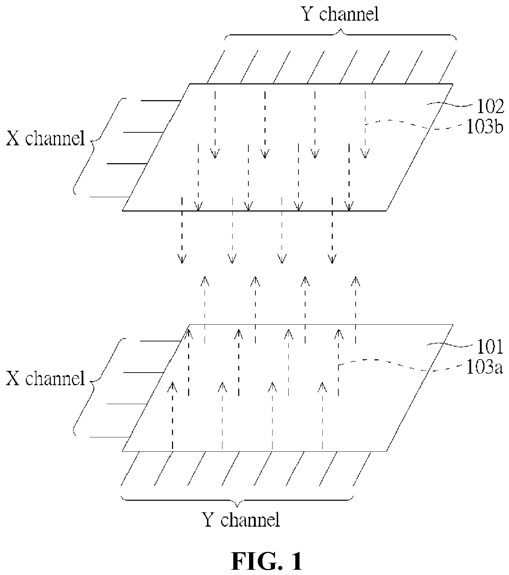

Please refer to FIG. 1, which illustrates a diagram of touch communications between a first touch panel device 101 and a second touch panel device 102 according to the related art. As shown in FIG. 1, there are near field electric fields 103a and 103b between the first touch panel device 101 and the second touch panel device 102. It should be noted that each of the first touch panel device 101 and the second touch panel device 102 can have the functionalities of transmitting and receiving signals. Based on this touch communications technology, when the first touch panel device 101 transmits signals toward the second touch panel device 102, the communications medium used by the first touch panel device 101 is the electric field portion whose electric field direction is pointing toward the second touch panel device 102 (e.g. the near electric field 103a shown in FIG. 1). In addition, when the second touch panel device 102 transmits signals toward the first touch panel device 101, the communications medium used by the second touch panel device 102 is the electric field portion whose electric field direction is pointing toward the first touch panel device 101 (e.g. the near electric field 103b shown in FIG. 1). Please note that the X channels and the Y channels shown in FIG. 1 may represent the transmitting electrodes and receiving electrodes installed on substrates, such as the transmitting electrodes and the receiving electrodes for forming capacitor structures.

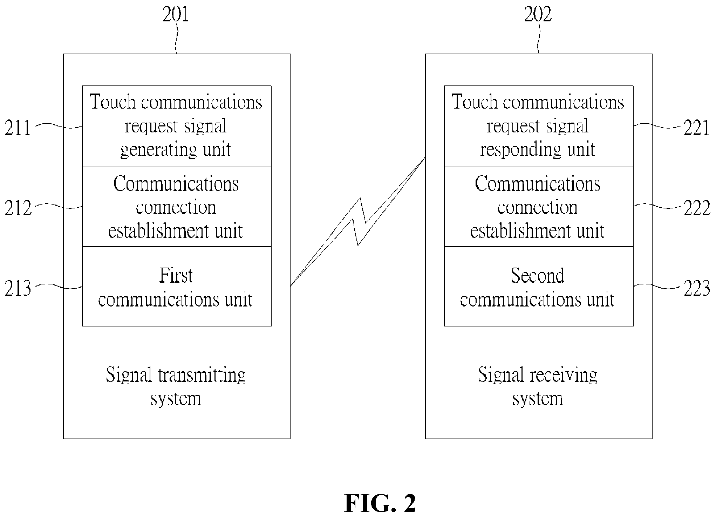

FIG. 2 is a logical block diagram of a touch communications system for realizing the touch communications between the first touch panel device 101 and the second touch panel device 102 shown in FIG. 1 according to the related art, where the touch communications system may comprise a signal transmitting system 201 and a signal receiving system 202. The first touch panel device 101 shown in FIG. 1 may comprise the signal transmitting system 201 shown in FIG. 2, and the second touch panel device 102 shown in FIG. 1 may comprise the signal receiving system 202 shown in FIG. 2. The signal transmitting system 201 may comprise a touch communications request signal generating unit 211, a communications connection establishment unit 212, and a first communications unit 213. More particularly, the touch communications request signal generating unit 211 may be arranged to generate a touch communications request signal, and to transmit the touch communications request signal to the second touch panel device 102 through the transmitting electrodes of the first touch panel device 101. After the first touch panel device 101 receives a response signal responded by the second touch panel device 102, such as the response signal received through the receiving electrodes of the first touch panel device 101, the communications connection establishment unit 212 may establish a communications connection with the second touch panel device 102 (i.e. the communications connection between the first touch panel device 101 and the second touch panel device 102). After the communications connection establishment unit 212 establishes the communications connection, the first communications unit 213 may transmit communications information and/or data to the second touch panel device 102 through the transmitting electrodes of the first touch panel device 101.

The signal receiving system 202 may comprise a touch communications request signal responding unit 221, a communications connection establishment unit 222, and a second communications unit 223. More particularly, after receiving the touch communications request signal transmitted by the first touch panel device 101, such as the touch communications request signal received through the receiving electrodes of the second touch panel device 102, the touch communications request signal responding unit 221 may respond to the touch communications request signal with a response signal such as that mentioned above, and more particularly, may send the response signal to the first touch panel device 101 through the transmitting electrodes of the second touch panel device 102. After the touch communications request signal responding unit 221 responds to the touch communications request signal of the first touch panel device 101 with the response signal, the communications connection establishment unit 222 may establish the communications connection with the first touch panel device 101 (i.e. the communications connection between the first touch panel device 101 and the second touch panel device 102). After the communications connection establishment unit 222 establishes the communications connection, the second communications unit 223 may receive the communications information and/or data from the first touch panel device 101 through the receiving electrodes of the second touch panel device 102.

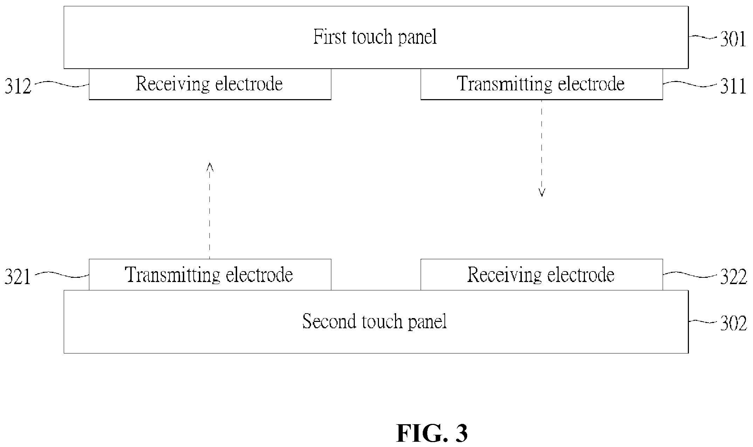

FIG. 3 illustrates a first touch panel 301 of the first touch panel device 101 shown in FIG. 1 and a second touch panel 302 of the second touch panel device 102 shown in FIG. 1 according to the related art. As shown in FIG. 3, each touch panel of the first touch panel 301 and the second touch panel 302 may comprise a touch sensor (not completely shown in FIG. 3). For example, the touch sensor of the first touch panel 301 may comprise a set of transmitting electrodes installed on at least one substrate of the first touch panel 301 (e.g. the transmitting electrode 311) for transmitting signals, and may comprise a set of receiving electrodes installed on at least one substrate of the first touch panel 301 (e.g. the receiving electrode 312) for receiving signals. In another example, the touch sensor of the second touch panel 302 may comprise a set of transmitting electrodes installed on at least one substrate of the second touch panel 302 (e.g. the transmitting electrode 321) for transmitting signals, and may comprise a set of receiving electrodes installed on at least one substrate of the second touch panel 302 (e.g. the receiving electrode 322) for receiving signals.

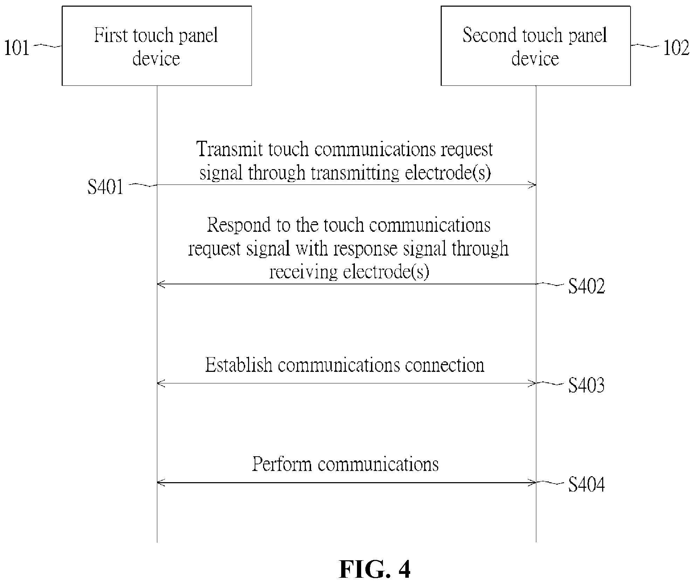

FIG. 4 is a flowchart of a touch communications method according to the related art. First, in Step S401, the touch communications request signal generating unit 211 of the first touch panel device 101 may generate a touch communications request signal such as that mentioned above, and transmit the touch communications request signal to the second touch panel device 102 through the transmitting electrode(s) of the first touch panel device 101. Afterward, in Step S402, the touch communications request signal responding unit 221 of the second touch panel device 102 may respond to the touch communications request signal with a response signal such as that mentioned above through the transmitting electrode(s) of the second touch panel device 102, and more particularly, send the response signal to the first touch panel device 101 through the transmitting electrode(s) of the second touch panel device 102. After the first touch panel device 101 receives the response signal responded by the second touch panel device 102, such as the response signal received through the receiving electrodes of the first touch panel device 101, in Step S403, the communications connection establishment unit 212 of the first touch panel device 101 and the communications connection establishment unit 222 of the second touch panel device 102 may establish a communications connection such as that mentioned above (i.e. the communications connection between the first touch panel device 101 and the second touch panel device 102). As a result, in Step S404, the first touch panel device 101 (more particularly, the first communications unit 213 therein) and the second touch panel device 102 (more particularly, the second communications unit 223 therein) may perform communications as shown in FIG. 4. For example, the first communications unit 213 of the first touch panel device 101 may transmit the communications information and/or data to the second touch panel device 102 through the transmitting electrodes of the first touch panel device 101, and the second communications unit 223 of the second touch panel device 102 may receive the communications information and/or data from the first touch panel device 101 through the receiving electrodes of the second touch panel device 102.

SUMMARY OF THE INVENTION

One of the objectives of the claimed invention is to provide a touch communications device for detecting at least one relative movement status of an object (e.g., another touch communications device or electronic device) that is close to, or in contact with, a touch panel of the touch communications device and a related movement detection method. The touch communications device may perform predetermined action in response to the at least one detected relative movement status of the object, thus improving the user experience of using the touch communications device (e.g., a mobile phone, a tablet, a wearable device, or a stylus that employs the touch communications technologies).

According to a first aspect of the present invention, an exemplary touch communications device is disclosed. The exemplary touch communications device includes a touch panel and a processing circuit. The touch panel is arranged to allow a communications connection to be established through the touch panel, and is further arranged to sense an object that is close to, or in contact with, the touch panel to generate a sensing output. The processing circuit is coupled to the touch panel. The processing circuit is arranged to perform touch communications control, and is further arranged to detect at least one relative movement status of the object according to the sensing output generated from the touch panel.

According to a second aspect of the present invention, an exemplary touch communications device is disclosed. The exemplary touch communications device includes a touch panel and a processing circuit. The touch panel is arranged to allow a communications connection to be established through the touch panel. The processing circuit is coupled to the touch panel and arranged to perform touch communications control. When the touch panel of the touch communications device is close to, or in contact with, a touch panel of another touch communications device, the processing circuit is further arranged to receive at least one relative movement status of the touch communications device generated by the another touch communications device through the communications connection established between the touch panel of the touch communications device and the touch panel of the another touch communications device, and confirm at least one final relative movement status of the another touch communications device according to at least the at least one received relative movement status of the touch communications device.

According to a third aspect of the present invention, an exemplary movement detection method employed by a touch communications device with a touch panel arranged to allow a communications connection to be established through the touch panel is disclosed. The exemplary movement detection method includes: utilizing the touch panel to sense an object that is close to, or in contact with, the touch panel to generate a sensing output; and detecting at least one relative movement status of the object according to the sensing output generated from the touch panel.

According to a fourth aspect of the present invention, an exemplary movement detection method employed by a touch communications device with a touch panel arranged to allow a communications connection to be established through the touch panel is disclosed. The exemplary movement detection method includes: when the touch panel of the touch communications device is close to, or in contact with, a touch panel of another touch communications device, receiving at least one relative movement status of the touch communications device generated by the another touch communications device through the communications connection established between the touch panel of the touch communications device and the touch panel of the another touch communications device; and confirming at least one final relative movement status of the another touch communications device according to at least the at least one received relative movement status of the touch communications device.

These and other objectives of the present invention will no doubt become obvious to those of ordinary skill in the art after reading the following detailed description of the preferred embodiment that is illustrated in the various figures and drawings.

BRIEF DESCRIPTION OF THE DRAWINGS

FIG. 1 is a diagram of touch communications between a first touch panel device and a second touch panel device according to the related art.
FIG. 2 is a logical block diagram of a touch communications system for realizing the touch communications between the first touch panel device and the second touch panel device shown in FIG. 1 according to the related art.
FIG. 3 illustrates a first touch panel of the first touch panel device shown in FIG. 1 and a second touch panel of the second touch panel device shown in FIG. 1 according to the related art.
FIG. 4 is a flowchart of a touch communications method according to the related art.
FIG. 5 is a diagram illustrating a touch communications device according to an embodiment of the present invention.
FIG. 6 is a diagram illustrating a touch communications device according to another embodiment of the present invention.
FIG. 7 is a diagram illustrating a position detection of an object on or above a touch panel according to an embodiment of the present invention.
FIG. 8 is a diagram illustrating an operation of obtaining one relative movement status of the object according to an embodiment of the present invention.

FIG. 9 is a diagram illustrating an operation of obtaining a path of the object according to an embodiment of the present invention.

FIG. 10 is a diagram illustrating a scenario where a touch communications device may fail to detect a relative movement between the touch communications device and another touch communications device.

FIG. 11 is a sequence diagram illustrating a relative movement information exchange procedure between two touch communications devices according to an embodiment of the present invention.

FIG. 12 is a flowchart illustrating a movement detection method according to an embodiment of the present invention.

## DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

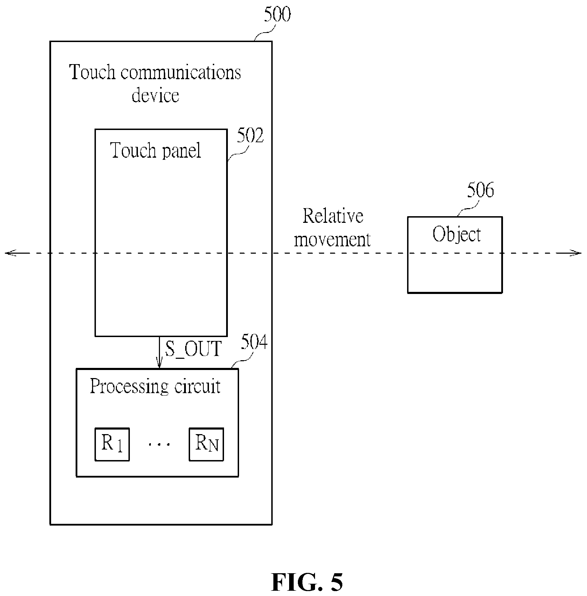

FIG. 5 is a diagram illustrating a touch communications device according to an embodiment of the present invention. An electronic device capable of performing touch communications can be referred to as a touch communications device. For example, a touch communications device mentioned hereinafter may be a mobile phone, a tablet, a wearable device or a stylus that employs touch communications technologies. As shown in FIG. 5, the touch communications device 500 may include a touch panel 502 and a processing circuit 504. The touch panel 502 can be a touch panel that does not have the display functionality (e.g., a touch pad), or a touch panel that has the display functionality (e.g., a touch screen). The touch panel 502 may be arranged to allow a communications connection to be established through the touch panel 502, such that the touch communications can be realized between two touch communications devices. For example, the touch communications device 500 may be implemented using the touch communications technologies mentioned above, and more particularly, can be a touch panel device that is capable of performing the operations of at least one of the first touch panel device 101 and the second touch panel device 102 mentioned above. In addition, the touch communications device 500 may be equipped with the processing circuit (e.g., a processor or a microcontroller) 504 coupled to the touch panel 502, and arranged to perform touch communications control. For example, the processing circuit 504 may run some program codes to control the associated operations of touch communications, including a touch communications request signal generating operation, a touch communications request signal responding operation, a communications connection establishing operation, a communications data transmitting operation, a communications data receiving operation, etc. It should be noted that only the components pertinent to the present invention are shown in FIG. 5. In practice, the touch communications device 500 may include additional components to achieve other functions.

When there is a relative movement between the touch communications device 500 and an object 506 (e.g., the object 506 is moving towards the touch communications device 500 when the touch communications device 500 is still, the touch communications device 500 is moving towards the object 506 while the object 506 is still, or the object 506 and the touch communications device 500 are moving towards each other), the processing circuit 504 may be further configured to detect at least one relative movement status (e.g., relative movement related information) $R_1$-$R_N$ of the object 506 when the object 506 is close to, or in contact with, the touch panel 502, where $N \geqq 1$. For example, the object 506 is moving on or above the touch panel 502, the at least one relative movement status $R_1$-$R_N$ of the object 506 may indicate that the object 506 is not still.

In this embodiment, the touch panel 502 may be further arranged to sense the object 506 that is close to, or in contact with, the touch panel 502 to generate a sensing output S_OUT, and the processing circuit 504 may be further arranged to detect at least one relative movement status $R_1$-$R_N$ of the object 506 according to the sensing output S_OUT generated from the touch panel. For example, the processing circuit 504 may analyze the sensing output S_OUT to detect the change of the electric field for identifying the position of the object 506, and may refer to the position detection result of the object 506 to determine one or more relative movement statuses of the object 506.

In one embodiment, the object 506 may not be a touch communications device. For example, the object 506 can have an electrically conductive part (e.g., a metal part) and/or can actively radiate a signal. Thus, the object 506 can still interact with the touch panel 502 to cause the change of the electric field. In another embodiment, the object 506 may be a touch communications device that can interact with the touch panel 502 to cause the change of the electric field, and may further communicate with the touch communications device 500 to transmit communications information to and/or receive communications information from the touch communications device 500.

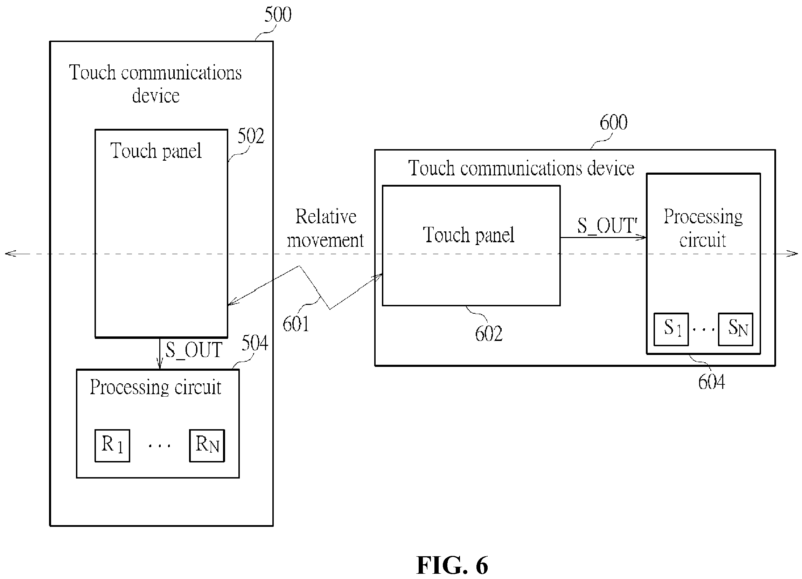

FIG. 6 is a diagram illustrating a touch communications device according to another embodiment of the present invention. In this embodiment, the object 506 shown in FIG. 5 may be implemented using a touch communications device 600. Hence, the touch communications device 500 may be used to detect the relative movement of the touch communications device 600. The touch communications device 600 may also have a touch panel 602 and a processing circuit 604. The touch panel 602 can be a touch panel that does not have the display functionality (e.g., a touch pad), or a touch panel that has the display functionality (e.g., a touch screen). The touch panel 602 may be arranged to allow a communications connection to be established through the touch panel 602. For example, the touch communications device 600 may be implemented using the touch communications technologies mentioned above, and more particularly, can be a touch panel device that is capable of performing the operations of at least one of the first touch panel device 101 and the second touch panel device 102 mentioned above. In addition, the touch communications device 600 may be equipped with the processing circuit (e.g., a processor or a microcontroller) 604 coupled to the touch panel 602, and arranged to perform touch communications control. For example, the processing circuit 604 may run some program codes to control the associated operations of touch communications, including a touch communications request signal generating operation, a touch communications request signal responding operation, a communications connection establishing operation, a communications data transmitting operation, a communications data receiving operation, etc. When the touch communications device 600 is placed to be close to, or in contact with, the touch panel 502, a communications connection 601 may be established between the touch panel 502 of the touch communications device 500 and the touch panel 602 of the touch communications device 600. It should be noted that only the components pertinent to the present invention are shown in FIG. 6. Like the touch communications device 500, the touch communications device 600 may include additional components to achieve other functions.

Further, when there is a relative movement between the touch communications devices 500 and 600 (e.g., the touch communications device 600 is moving towards the touch communications device 500 when the touch communications device 500 is still, the touch communications device 500 is moving towards the touch communications device 600 while the touch communications device 600 is still, or the touch communications devices 500 and 600 are moving towards each other), the processing circuit 504 may detect at least one relative movement status $R_1$-$R_N$ of the touch communications device 600 when the touch communications device 600 is close to, or in contact with, the touch panel 502; and/or the processing circuit 604 may detect at least one relative movement status $S_1$-$S_N$ of the touch communications device 500 when the touch communications device 500 is close to, or in contact with, the touch panel 602.

In this embodiment, the touch panel 502 may be further arranged to sense the touch communications device 600, especially the touch panel 602, that is close to, or in contact with, the touch panel 502 to generate a sensing output S_OUT, and the processing circuit 504 may be further arranged to detect at least one relative movement status $R_1$-$R_N$ of the touch communications device 600 according to the sensing output S_OUT generated from the touch panel 502. Similarly, the touch panel 602 may be further arranged to sense the touch communications device 500, especially the touch panel 502, that is close to, or in contact with, the touch panel 602 to generate a sensing output S_OUT', and the processing circuit 604 may be further arranged to detect at least one relative movement status $S_1$-$S_N$ of the touch communications device 500 according to the sensing output S_OUT' generated from the touch panel 602. To put it another way, the operation and function of the touch panel 602 may be similar/identical to that of the touch panel 502; and the operation and function of the processing circuit 604 may be similar/identical to that of the processing circuit 604.

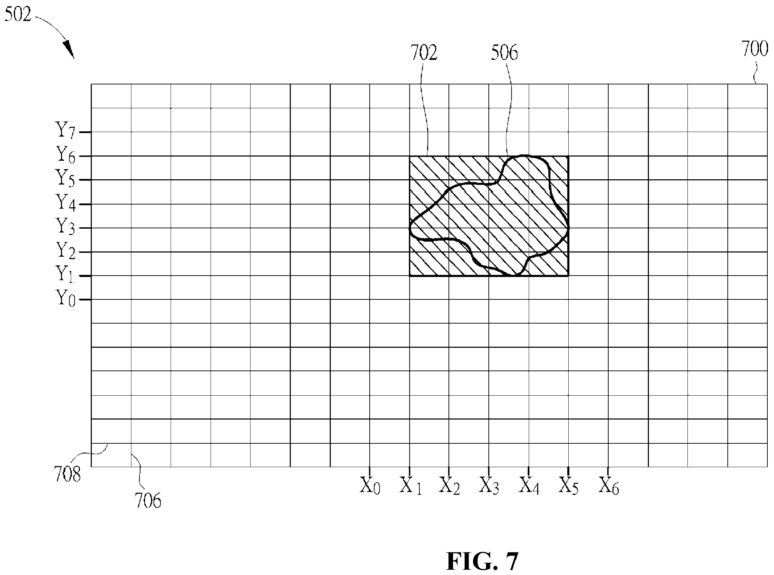

FIG. 7 is a diagram illustrating a position detection of an object on or above a touch panel according to an embodiment of the present invention. As mentioned above, the object 506 can interact with the touch panel 502 to cause the change of the electric field. The touch panel 502 may be configured to have an electrode grid 700 composed of a plurality of electrodes. In this example, the electrode grid 700 may have vertical electrodes (i.e., X-axis electrodes) 706 and horizontal electrodes (i.e., Y-axis electrodes) 708. However, this is for illustrative purposes only, and is not meant to be a limitation of the present invention. In an alternative design, the electrode grid 700 may have a different arrangement of electrodes. The electrodes may be placed in directions different from vertical and horizontal, such as 45 degrees to the X-axis, and may be in shape different from straight line, such as arc. Suppose that the object 506 has an irregular shape as shown in FIG. 7. The sensing output S_OUT of the touch panel 502 may include signals read from one or more of the vertical electrodes 706 and the horizontal electrodes 708. When the object 506 is close to, or in contact with, the touch panel 502, the vertical electrodes $X_1$-$X_5$ may sense the object 506 to output signals indicative of the change of the electric field, and the horizontal electrodes $Y_1$-$Y_6$ may also sense the object 506 to output signals indicative of the change of the electric field. The processing circuit 504 may detect a position where the object 506 is close to, or in contact with, the touch panel 502 through deciding an overlapped area 702 defined by specific electrodes of the electrode grid 700. In one example, the specific electrodes may include each of the electrodes $X_1$-$X_5$ and $Y_1$-$Y_6$ that senses the object 506. In another example, the specific electrodes may include the electrodes $X_1$, $X_5$, $Y_1$ and $Y_6$ that senses at least a portion of the outline of the object 506. In still another example, the specific electrodes may include the

electrodes (e.g., $X_0$, $X_6$, $Y_0$ and $Y_7$) that do not sense the object 506 but are next to (or close to) the electrodes sensing the object 506 (e.g. $X_1$, $X_5$, $Y_1$ and $Y_6$). For example, an overlapped area determined in this case may be larger than the overlapped area 702 illustrated in FIG. 7.

As shown in FIG. 7, the overlapped area 702 may be a rectangle that is capable of including a projected area of the object 506 on or above the touch panel 502. In one exemplary design, a position where the object 506 is close to, or in contact with, the touch panel 502 may be recorded using four vertices (X1, Y6), (X1, Y1), (X5, Y6), (X5, Y1) of the overlapped area 702. In another exemplary design, a position where the object 506 is close to, or in contact with, the touch panel 502 may be recorded using a geometric center coordinate, a length and a width of the overlapped area 702. In yet another exemplary design, a position where the object 506 is close to, or in contact with, the touch panel 502 may be recorded using a coordinate of a specific point within the overlapped area 702. The above is for illustrative purposes only, and is not meant to be a limitation of the present invention. The shape, the vertices, the center coordinate and the dimensions of the overlapped area may vary with the arrangement of the electrodes, the shape of the electrodes, the shape and dimensions of the object, etc. Besides, any means that determines a position where the object 506 is close to, or in contact with, the touch panel 502 based on the sensing output S_OUT falls within the scope of the present invention. To put it simply, a detected position where the object 506 is close to, or in contact with, the touch panel 502 may be used to identify a relative movement status; however, the present invention has no limitations on the algorithm that is used for determining/computing a position based on information given by an overlapped area corresponding to the object 506.

It should be noted that similar or the same position detection means shown in FIG. 7 may also be employed by the touch communications device 600 when the object 506 shown in FIG. 5 is implemented using the touch communications device 600, as shown in FIG. 6. For example, based on similar or the same position detection means used by the touch communications device 500, the touch communications device 600 may detect an overlapped area to find a position where the touch communications device 500 is close to, or in contact with, the touch communications device 600. Further description is omitted here for brevity.

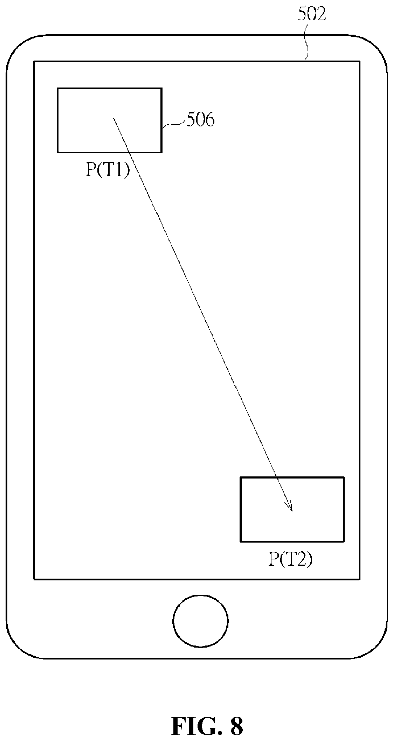

To obtain one relative movement status of the object 506, the processing circuit 504 may be arranged to detect the position of the object 506 at different sampling timings. FIG. 8 is a diagram illustrating an operation of obtaining one relative movement status of the object 506 according to an embodiment of the present invention. The processing circuit 504 may be arranged to detect a first position P(T1) where the object 506 is close to, or in contact with, the touch panel 502 at a first sampling timing T1, detect a second position P(T2) where the object 506 is close to, or in contact with, the touch panel 502 at a second sampling timing T2, and detect one relative movement status (e.g., one of $R_1$-$R_N$) of the object 506 according to at least the first position P(T1) and the second position P(T2). For example, the relative movement status may be determined based at least partly on

$$\frac{P(T2) - P(T1)}{T2 - T1},$$ where $T2 = T1 + T_S$, and $T_S$ is a sampling period between two adjacent sampling events. In a case where the second position P(T2) is different from the first position P(T1) as shown in FIG. 8, the relative movement status detected by the processing circuit 504 may indicate that the object 506 is moving. In other words, based solely on the detected relative movement status of the object 506, the touch communications device 500 may deem that there is a relative movement between the touch communications device 500 and the object 506 during the sampling period $T_S$. In another case where the second position P(T2) is identical to the first position P(T1), the relative movement status detected by the processing circuit 504 may indicate that the object 506 is still. In other words, based solely on the detected relative movement status of the object 506, the touch communications device 500 may deem that there is no relative movement between the touch communications device 500 and the object 506 during the sampling period $T_S$.

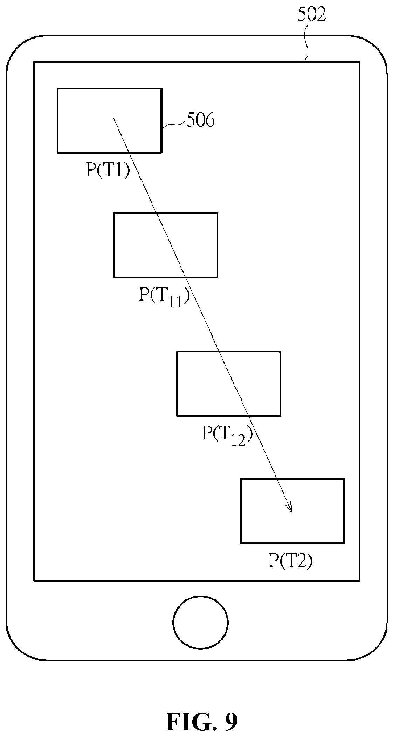

Further, the processing circuit 504 may be arranged to obtain a path of the object 506 moving on or above the touch panel 502 based on at least one of positions of the object 506 detected at more than one sampling timing. FIG. 9 is a diagram illustrating an operation of obtaining a path of the object 506 according to an embodiment of the present invention. For example, the aforementioned sampling period $T_S$ may be shortened to increase the sampling frequency. When the sampling frequency is higher, the accuracy of the estimated path of the object 506 can be enhanced. In the example shown in FIG. 9, the sampling period may be set as $\frac{T_S}{4}$. Hence, the processing circuit 504 may detect positions P(T1), P($T_{11}$), P($T_{12}$), P(T2) at successive sampling timings T1, $T_{12}$, $T_{12}$, T2, respectively, where $T_{11} = T1 + \frac{T_S}{4}$, $T_{12} = T_{11} + \frac{T_S}{4}$, and $T2 = T_{12} + \frac{T_S}{4}$. In the end, the processing circuit 504 can estimate the path of the object 506 moving on or above the touch panel 502 according to the at least one of P(T1), P($T_{11}$), P($T_{12}$), P(T2). In addition, the processing circuit 504 may detect a plurality of relative movement statuses (e.g., $R_1$, $R_2$, and $R_3$) of the object 506 according to the positions P(T1), P($T_{11}$), P($T_{12}$), and P(T2). For example, one relative movement

status (e.g., $R_1$) may be determined based on

$$\frac{P(T_{11}) - P(T1)}{T_{11} - T1}$$ ; another relative movement status

(e.g., $R_2$) may be determined based on

$$\frac{P(T_{12}) - P(T_{11})}{T_{12} - T_{11}}$$ ; and yet another relative movement

status (e.g., $R_3$) may be determined based on

$$\frac{P(T2) - P(T_{12})}{T2 - T_{12}}$$ .

It should be noted that similar or the same relative movement status detection means shown in FIG. 8 may also be employed by the touch communications device 600 when the object 506 shown in FIG. 5 is implemented using the touch communications device 600, as shown in FIG. 6; and/or similar or the same path detection means shown in FIG. 9 may also be employed by the touch communications device 600 when the object 506 shown in FIG. 5 is implemented using the touch communications device 600, as shown in FIG. 6. For example, when the touch communications device 500 is close to, or in contact with, the touch communications device 600, the touch communications device 600 may detect one relative movement status of the touch communications device 500 according to similar or the same relative movement status detection means used by the touch communications device 500; and/or may detect a path of the touch communications device 500 according to similar or the same path detection means used by the touch communications device 500. Further description is omitted here for brevity.

Based on the relative movement status and/or the path of the object 506, the touch communications device 500 may perform a predetermined operation correspondingly. Assume that the object 506 is implemented using the touch communications device 600 shown in FIG. 6. In a first usage scenario where the touch communications device 500 is a mobile phone employing the touch communications technologies and the object 506 is a smartwatch employing the touch communications technologies, the action of moving the smartwatch on or above a touch display of the mobile phone can trigger the function of unlocking a user interface (e.g., a display screen) of the mobile phone. In a second usage scenario where the touch communications device 500 is a smartwatch employing the touch communications technologies and the touch communications device 600 is a mobile phone employing the touch communications technologies, the action of moving the mobile phone on or above a touch display of the smartwatch can trigger the function of turning on the backlight of the display screen of the smartwatch. In a third usage scenario where the touch communications device 500 is a tablet employing the touch communications technologies and the touch communications device 600 is a stylus employing the touch communications technologies, the action of moving the stylus on or above a touch display of the tablet can be used for generating a handwriting input or an autograph input for a particular application running on the tablet.

As mentioned above, the relative movement may occur between a fixed device and a moving device or occur between two moving devices. However, under certain scenarios, it is possible that the touch communications device 500 is unable to detect the relative movement of the object 506 when the object 506 is moving on or above the touch panel 502. If the object 506 is implemented using the touch communications device 600, the touch communications device 600 may have the chance of detecting the relative movement of the touch communications device 500, and may output a detected relative movement status of the touch communications device 500 to inform the touch communications device 500 of the relative movement between the touch communications devices 500 and 600. Hence, with the help of the relative movement information given by another touch communications device 600, the touch communications device 500 can determine a correct relative movement status of the touch communications device 600.

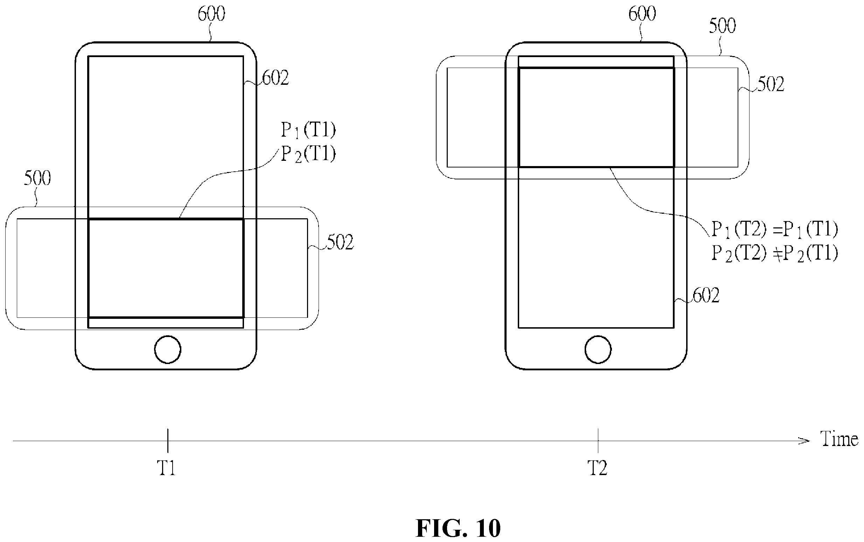

FIG. 10 is a diagram illustrating a scenario where a touch communications device may fail to detect a relative movement between the touch communications device and another touch communications device. At the sampling timing T1, the touch panel 602 of the touch communications device 600 is close to, or in contact with, the touch panel 502 of the touch communications device 500, and the processing circuit 504 may detect an overlapped area with the position $P_1(T1)$ according to the sensing output S_OUT of the touch panel 502. In addition, at the same sampling timing T1, the touch panel 502 of the touch communications device 500 is close to, or in contact with, the touch panel 602 of the touch communications device 600, and the processing circuit 604 may detect an overlapped area with the position $P_2(T1)$ according to the sensing output S_OUT' of the touch panel 602.

In this example, the user of the touch communications device 500 may move the touch communications device 500 upwards during the sampling period. At the sampling timing T2, the touch panel 602 of the touch communications device 600 is close to, or in contact with, the touch panel 502 of the touch communications device 500, and the processing circuit 504 may detect an overlapped area with the position $P_1(T2)$ according to the sensing output S_OUT of the touch panel 502. As can be seen from FIG. 10, the overlapped area determined based on the sensing output S_OUT at the sampling timing T2 may be identical to the overlapped area determined based on the sensing output S_OUT at the sampling timing T1. Hence, the position $P_1(T2)$ may be identical to the position $P_1(T1)$. Thus, the relative movement status determined by the processing circuit 504 may indicate that the touch communications device 600 is still and therefore has no relative movement with respect to the touch communications device 500.

However, at the same sampling timing T2, the touch panel 502 of the touch communications device 500 is close to, or in contact with, the touch panel 602 of the touch communications device 600, and the processing circuit 604 may detect an overlapped area with the position $P_2(T2)$ according to the sensing output S_OUT' of the touch panel 602. As can be seen from FIG. 10, the overlapped area determined based on the sensing output S_OUT' at the sampling timing T2 may be different from the overlapped area determined based on the sensing output S_OUT' at the sampling timing T1. Hence, the position $P_2(T2)$ may be different from the position $P_2(T1)$. In this example, the relative movement status determined by the processing circuit 604 may indicate that the touch communications device 500 has an upward movement with respect to the touch communications device 600. If the relative movement status determined by the processing circuit 604 can be transmitted from the touch communications device 600 to the touch communications device 500 through the communications connection 601, the processing circuit 504 can refer to the relative movement status determined by the processing circuit 604 to confirm a final movement status of the touch communications device 600. For example, the final movement status confirmed by the processing circuit 504 may indicate that the touch communications device 600 has a downward movement with respect to the touch communications device 500.

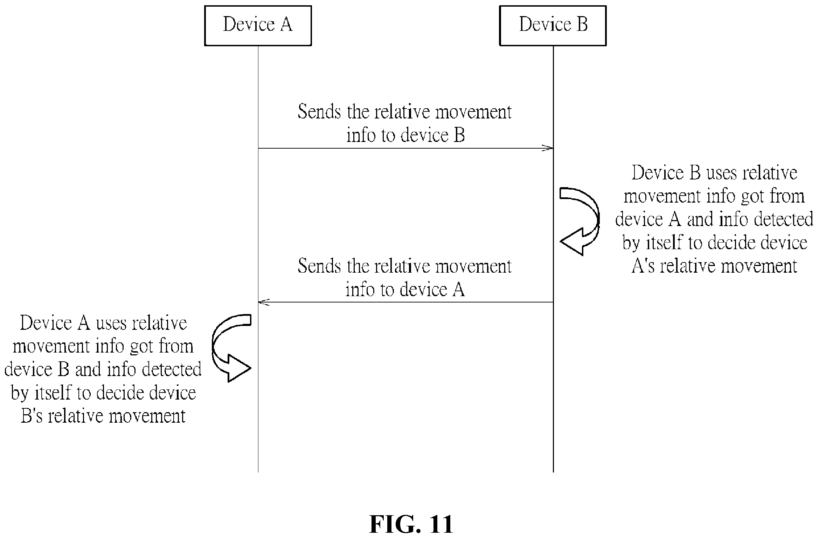

As mentioned above, one touch communications device may receive relative movement information provided from another touch communications device to achieve a more accurate detection of a relative movement status of the another touch communications device. FIG. 11 is a sequence diagram illustrating a relative movement information exchange procedure between two touch communications devices (denoted by "Device A" and "Device B") according to an embodiment of the present invention. Hence, when there are two touch communications devices close to, or in contact with, each other, both of the touch communications devices may exchange/share the relative movement information with each other. In this way, each of the touch communications devices is capable of achieving a more accurate detection of a relative movement status of the other touch communications device.

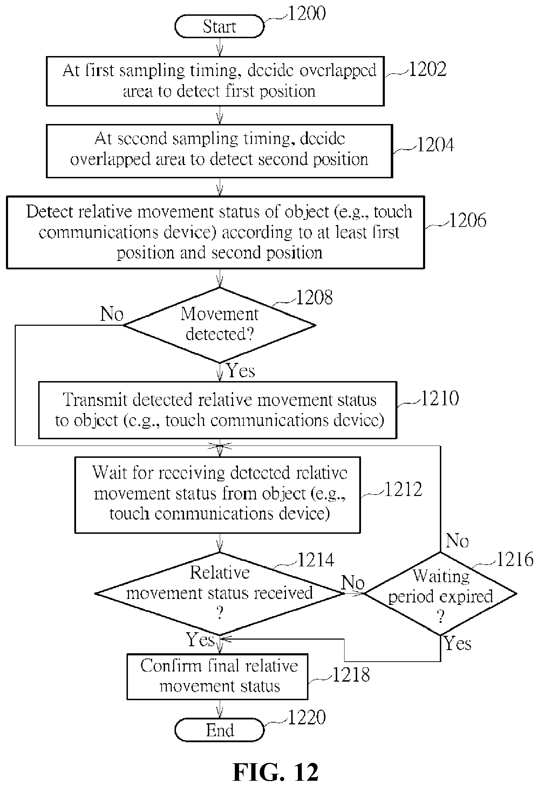

FIG. 12 is a flowchart illustrating a movement detection method according to an embodiment of the present invention. The movement detection method may be employed by a touch communications device, such as any of the touch communications devices 500 and 600 shown in FIG. 5 and FIG. 6. Provided that the result is substantially the same, the steps are not required to be executed in the exact order shown in FIG. 12. Assuming that the movement detection method is to confirm a final relative movement status of an object (e.g., another touch communications device 600) close to, or in contact with, one touch communications device 500, the movement detection method employed by the touch communications device 500 may be briefly summarized as follows.

Step 1200: Start.

Step 1202: At the first sampling timing T1, the touch communications device 500 decides an overlapped area to detect a first position where an object (e.g., touch communications device 600) is close to, or in contact with, the touch panel 502 of the touch communications device 500.

Step 1204: At the second sampling timing T2, the touch communications device 500 decides an overlapped area to detect a second position where the object (e.g., touch communications device 600) is close to, or in contact with, the touch panel 502 of the touch communications device 500.

Step 1206: The touch communications device 500 detects a relative movement status of the object (e.g., touch communications device 600) according to at least the first position and the second position.

Step 1208: Check if the object (e.g., touch communications device 600) has movement according to the relative movement status of the object. If it is determined that the object has movement, go to step 1210; otherwise, go to step 1212.

Step 1210: The touch communications device 500 transmits the detected relative movement status of the object (e.g., touch communications device 600) to the object through the communications connection 601 established between touch panel 502 of the touch communications device 500 and touch panel 602 of the object (e.g., touch communications device 600).

Step 1212: The touch communications device 500 waits for receiving a detected relative movement status of the touch communications device 500 from the object (e.g., touch communications device 600) through the communications connection 601 established between touch panel 502 of the touch communications device 500 and touch panel 602 of the object (e.g., touch communications device 600).

Step 1214: Is the detected relative movement status of the touch communications device 500 received from the object (e.g., touch communications device 600)? If yes, go to step 1218; otherwise, go to step 1216.

Step 1216: Check if a waiting period is expired. If yes, go to step 1218; otherwise, go to step 1212.

Step 1218: Confirm a final relative movement status of the object (e.g., touch communications device 600).

Step 1220: End.

When the detected relative movement status of the touch communications device 600 indicates that the touch communications device 600 has no movement, the touch communications device 500 may wait for receiving the detected relative movement status of the touch communications device 500 from the touch communications device 600. In a case where the detected relative movement status of the touch communications device 500 generated by the touch communications device 600 indicates that the touch communications device 500 has no movement, the touch communications device 600 may not transmit the detected relative movement status of the touch communications device 500 to the touch communications device 500. Hence, the touch communications device 500 may not receive the detected relative movement status of the touch communications device 500 from the touch communications device 600 during the waiting period. In the end, the touch communications device 500 may confirm the final relative movement status of the touch communications device 600 based solely on the detected movement status of the touch communications device 600 generated by the touch communications device 500. However, the touch communications device 600 may still transmit the detected relative movement status indicating that the touch communications device 500 has no movement to the touch communications device 500, so the touch communications device 500 confirms that the touch communications devices 500 and 600 have no relative movement based on the detected relative movement status of the touch communications device 600 generated by the touch communications device 500 and the detected relative movement status of the touch communications device 500 generated by the touch communications device 600. By way of example, but not limitation, the final relative movement status of the touch communications device 600 may indicate that the touch communications device 600 is still or the touch communications devices 500 and 600 have no relative movement.

As mentioned above, when the detected relative movement status of the touch communications device 600 indicates that the touch communications device 600 has no movement, the touch communications device 500 may wait for receiving the detected relative movement status of the touch communications device 500 from the touch communications device 600. In another case where the detected relative movement status of the touch communications device 500 generated by the touch communications device 600 indicates that the touch communications device 500 has movement, the touch communications device 600 may transmit the detected relative movement status of the touch communications device 500 to the touch communications device 500. Hence, the touch communications device 500 may receive the detected relative movement status of the touch communications device 500 from the touch communications device 600 during the waiting period. In the end, the touch communications device 500 may confirm the final relative movement status of the touch communications device 600 based on the detected relative movement status of the touch communications device 600 generated by the touch communications device 500 and the detected relative movement status of the touch communications device 500 generated by the touch communications device 600. By way of example, but not limitation, the final relative movement status of the touch communications device 600 may indicate that the touch communications device 600 is moving or the touch communications devices 500 and 600 have relative movement.

However, when the detected relative movement status of the touch communications device 600 indicates that the touch communications device 600 has movement, the touch communications device 500 may transmit the detected movement status of the touch communications device 600 to the touch communications device 600, and may further wait for receiving the detected relative movement status of the touch communications device 500 from the touch communications device 600. In a case where the detected relative movement status of the touch communications device 500 generated by the touch communications device 600 indicates that the touch communications device 500 has no movement, the touch communications device 600 may not transmit the detected relative movement status of the touch communications device 500 to the touch communications device 500. Hence, the touch communications device 500 may not receive the detected relative movement status of the touch communications device 500 from the touch communications device 600 during the waiting period. In the end, the touch communications device 500 may confirm the final relative movement status of the touch communications device 600 based solely on the detected movement status of the touch communications device 600 generated by the touch communications device 500. However, the touch communications device 600 may still transmit the detected relative movement status indicating that the touch communications device 500 has no movement to the touch communications device 500, so the touch communications device 500 confirms that the touch communications device 600 has movement based on the detected relative movement status of the touch communications device 600 generated by the touch communications device 500 and the detected relative movement status of the touch communications device 500 generated by the touch communications device 600. By way of example, but not limitation, the final relative movement status of the touch communications device 600 may indicate that the touch communications device 600 is moving or the touch communications devices 500 and 600 have relative movement.

As mentioned above, when the detected relative movement status of the touch communications device 600 indicates that the touch communications device 600 has movement, the touch communications device 500 may transmit the detected movement status of the touch communications device 600 to the touch communications device 600, and may further wait for receiving the detected relative movement status of the touch communications device 500 from the touch communications device 600. In another case where the detected relative movement status of the touch communications device 500 generated by the touch communications device 600 indicates that the touch communications device 500 has movement, the touch communications device 600 may transmit the detected relative movement status of the touch communications device 500 to the touch communications device 500. Hence, the touch communications device 500 may receive the detected relative movement status of the touch communications device 500 from the touch communications device 600 during the waiting period. In the end, the touch communications device 500 may confirm the final relative movement status of the touch communications device 600 based on the detected relative movement status of the touch communications device 600 generated by the touch communications device 500 and the detected relative movement status of the touch communications device 500 generated by the touch communications device 600. However, in another case, the touch communications device 600 may not transmit the detected relative movement status indicating that the touch communications device 500 has movement to the touch communications device 500, so the touch communications device 500 confirms that the touch communications device 600 has movement based solely on the detected relative movement status of the touch communications device 600 generated by the touch communications device 500. By way of example, but not limitation, the final relative movement status of the touch communications device 600 may indicate that the touch communications device 600 is moving or the touch communications devices 500 and 600 have relative movement.

As a person skilled in the art can readily understand details of each step shown in FIG. 12 after reading above paragraphs, further description is omitted here for brevity.

It should be noted that one or more steps in FIG. 12 may be omitted under different usage scenarios. For example, when the object 506 close to, or in contact with, the touch communications device 500 is not a touch communications device, steps 1210, 1212, 1214, 1216 and 1218 may be omitted. Hence, the touch communications device 500 may take the detected relative movement status of the object 506 generated by the touch communications device 500 as the relative movement status of the object 506. For another example, when one of the touch communications devices 500 and 600 is immobile, steps 1202, 1204, 1206, 1208 and 1210 may be omitted. Hence, the touch communications device 500 may confirm the final relative movement status of the touch communications device 600 based solely on the detected relative movement status of the touch communications device 500 generated by the touch communications device 600. For another example, when movement is detected in step 1208, steps 1210, 1212, 1214 and 1216 may be omitted. Hence, the touch communications device 500 may confirm the final relative movement status of the object 506 based solely on the detected relative movement status of the object 506 generated by the touch communications device 500. These alternative movement detection designs all fall within the scope of the present invention.

It should be noted that, in the embodiments mentioned above, a situation that the object 506/touch communications device 600 is close to, or in contact with, the touch panel 502/the touch communications device 500 may mean that a distance between the object 506/touch communications device 600 and the touch panel 502/the touch communications device 500 is not larger than a predetermined distance value. In one example, the predetermined distance value may be 2cm. However, the predetermined distance value may vary with the touch panel, its driving IC, and the design of the object and the touch communications device, etc. and may be greater, such as 5 cm, or may be less, such as 2 mm, and so on.

Those skilled in the art will readily observe that numerous modifications and alterations of the device and method may be made while retaining the teachings of the invention. Accordingly, the above disclosure should be construed as limited only by the metes and bounds of the appended claims.

The present invention can also be described by means of the following clauses:

1. A touch communications device, comprising:

a touch panel, arranged to allow a communications connection to be established through the touch panel, wherein the touch panel is further arranged to sense an object that is close to, or in contact with, the touch panel to generate a sensing output; and

a processing circuit, coupled to the touch panel and arranged to perform touch communications control, wherein the processing circuit is further arranged to detect at least one relative movement status of the object according to the sensing output generated from the touch panel.

2. The touch communications device of clause 1, wherein the processing circuit is arranged to detect a first position where the object is close to, or in contact with, the touch panel at a first sampling timing, detect a second position where the object is close to, or in contact with, the touch panel at a second sampling timing, and detect a relative movement status of the object according to at least the first position and the second position.

3. The touch communications device of clause 2, wherein the processing circuit is arranged to detect a path of the object according to at least one of the first position and the second position.

4. The touch communications device of clause 1, wherein the touch panel comprises an electrode grid; and the processing circuit is arranged to detect a position where the object is close to, or in contact with, the touch panel through deciding an overlapped area defined by specific electrodes of the electrode grid.

5. The touch communications device of clause 1, wherein the processing circuit is further arranged to confirm at least one final relative movement status of the object based solely on the at least one detected relative movement status of the object.

6. The touch communications device of clause 1, wherein the object is another touch communications device.

7. The touch communications device of clause 6, wherein the processing circuit is further arranged to transmit the at least one detected relative movement status of the another touch communications device to the another touch communications device through the communications connection established between the touch panel of the touch communications device and a touch panel of the another touch communications device.

8. The touch communications device of clause 6, wherein the processing circuit is further arranged to receive at least one relative movement status of the touch communications device from the another touch communications device through the communications connection established between the touch panel of the touch communications device and a touch panel of the another touch communications device, and confirm at least one final relative movement status of the another touch communications device according to the at least one detected relative movement status of the another touch communications device and the at least one received relative movement status of the touch communications device.

9. A touch communications device, comprising:

a touch panel, arranged to allow a communications connection to be established through the touch panel; and
a processing circuit, coupled to the touch panel and arranged to perform touch communications control, wherein when the touch panel of the touch communications device is close to, or in contact with, a touch panel of another touch communications device, the processing circuit is further arranged to receive at least one relative movement status of the touch communications device generated by the another touch communications device through the communications connection established between the touch panel of the touch communications device and the touch panel of the another touch communications device, and confirm at least one final relative movement status of the another touch communications device according to at least the at least one received relative movement status of the touch communications device.

10. The touch communications device of clause 9, wherein the at least one final relative movement status of the another touch communications device is confirmed based solely on the at least one received relative movement status of the touch communications device.

11. A movement detection method employed by a touch communications device with a touch panel arranged to allow a communications connection to be established through the touch panel, comprising:

utilizing the touch panel to sense an object that is close to, or in contact with, the touch panel to generate a sensing output; and
detecting at least one relative movement status of the object according to the sensing output generated from the touch panel.

12. The movement detection method of clause 11, wherein detecting the at least one relative movement status of the object according to the sensing output generated from the touch panel comprises:

detecting a first position where the object is close to, or in contact with, the touch panel at a first sampling timing;
detecting a second position where the object is close to, or in contact with, the touch panel at a second sampling timing; and
detecting a relative movement status of the object according to at least the first position and the second position.

13. The movement detection method of clause 12, further comprising:

detecting a path of the object according to at least one of the first position and the second position.

14. The movement detection method of clause 11, wherein the touch panel comprises an electrode grid; and a position where the object is close to, or in contact with, the touch panel is detected through deciding an overlapped area defined by specific electrodes of the electrode grid.

15. The movement detection method of clause 11, further comprising:

confirming at least one final relative movement status of the object based solely on the at least one detected relative movement status of the object.

16. The movement detection method of clause 11, wherein the object is another touch communications device.

17. The movement detection method of clause 16, further comprising:

transmitting the at least one detected relative movement status of the another touch communications device to the another touch communications device through the communications connection established between the touch panel of the touch communications device and a touch panel of the another touch communications device.

18. The movement detection method of clause 16, further comprising:

receiving at least one relative movement status of the touch communications device from the another touch communications device through the communications connection established between the touch panel of the touch communications device and a touch panel of the another touch communications device; and confirming at least one final relative movement status of the another touch communications device according to the at least one detected relative movement status of the another touch communications device and the at least one received relative movement status of the touch communications device.

19. A movement detection method employed by a touch communications device with a touch panel arranged to allow a communications connection to be established through the touch panel, comprising:

when the touch panel of the touch communications device is close to, or in contact with, a touch panel of another touch communications device, receiving at least one relative movement status of the touch communications device detected by the another touch communications device through the communications connection established between the touch panel of the touch communications device and the touch panel of the another touch communications device; and confirming at least one final relative movement status of the another touch communications device according to at least the at least one received relative movement status of the touch communications device.

20. The movement detection method of clause 19, wherein the at least one final relative movement status of the another touch communications device is confirmed based solely on the at least one received relative movement status of the touch communications device.

**Claims**

1. A touch communications device, comprising:

a touch panel, arranged to allow a communications connection to be established through the touch panel; and a processing circuit, coupled to the touch panel and arranged to perform touch communications control, wherein when the touch panel of the touch communications device is close to, or in contact with, a touch panel of another touch communications device, the processing circuit is further arranged to receive at least one relative movement status of the touch communications device generated by the another touch communications device through the communications connection established between the touch panel of the touch communications device and the touch panel of the another touch communications device, and confirm at least one final relative movement status of the another touch communications device according to at least the at least one received relative movement status of the touch communications device.

2. The touch communications device of claim 1, wherein the at least one final relative movement status of the another touch communications device is confirmed based solely on the at least one received relative movement status of the touch communications device.

3. A movement detection method employed by a touch communications device with a touch panel arranged to allow a communications connection to be established through the touch panel, comprising:

when the touch panel of the touch communications device is close to, or in contact with, a touch panel of another touch communications device, receiving at least one relative movement status of the touch communications device detected by the another touch communications device through the communications connection established between the touch panel of the touch communications device and the touch panel of the another touch communications device; and confirming at least one final relative movement status of the another touch communications device according to at least the at least one received relative movement status of the touch communications device.

4. The movement detection method of claim 3, wherein the at least one final relative movement status of the another touch communications device is confirmed based solely on the at least one received relative movement status of the touch communications device.

**FIG. 1**

201

211 — Touch communications request signal generating unit

212 — Communications connection establishment unit

213 — First communications unit

Signal transmitting system

202

Touch communications request signal responding unit — 221

Communications connection establishment unit — 222

Second communications unit — 223

Signal receiving system

**FIG. 2**

| First touch panel | | ～ 301 |
|---|---|---|

312 ～ Receiving electrode      Transmitting electrode ～ 311

321 ～ Transmitting electrode      Receiving electrode ～ 322

| Second touch panel | | ～ 302 |
|---|---|---|

**FIG. 3**

EP 3 267 292 A1

| 101 | First touch panel device | | | Second touch panel device | 102 |

Transmit touch communications request
signal through transmitting electrode(s)

S401

Respond to the touch communications
request signal with response signal through
receiving electrode(s)

S402

Establish communications connection

S403

Perform communications

S404

**FIG. 4**

**FIG. 5**

**FIG. 6**

**FIG. 7**

EP 3 267 292 A1

**FIG. 8**

502

506

P(T1)

P(T$_{11}$)

P(T$_{12}$)

P(T2)

**FIG. 9**

**FIG. 10**

Device A

Device B

Sends the relative movement
info to device B

Device B uses relative
movement info got from
device A and info detected
by itself to decide device
A's relative movement

Sends the relative movement
info to device A

Device A uses relative
movement info got from
device B and info detected
by itself to decide device
B's relative movement

**FIG. 11**

Start — 1200

At first sampling timing, decide overlapped area to detect first position — 1202

At second sampling timing, decide overlapped area to detect second position — 1204

Detect relative movement status of object (e.g., touch communications device) according to at least first position and second position — 1206

Movement detected? — 1208

No

Yes

Transmit detected relative movement status to object (e.g., touch communications device) — 1210

Wait for receiving detected relative movement status from object (e.g., touch communications device) — 1212

Relative movement status received? — 1214

No

Waiting period expired? — 1216

No

Yes

Yes

Confirm final relative movement status — 1218

End — 1220

**FIG. 12**

Europäisches
Patentamt

European
Patent Office

Office européen
des brevets

# EUROPEAN SEARCH REPORT

Application Number

EP 17 18 1805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 107 771 A1 (SONY ERICSSON MOBILE COMM JP [JP]) 7 October 2009 (2009-10-07) * paragraphs [0014], [0022] * * paragraph [0053] - paragraph [0068]; figures 14-20 * | 1-4 | INV. G06F3/01 G06F3/044 H04W4/00 G06F3/041 |
| A,D | US 2013/147760 A1 (LAI MING-TE [TW] ET AL) 13 June 2013 (2013-06-13) * paragraph [0007] - paragraph [0008] * * paragraph [0029]; figure 7 * | 1-4 | |
| A,D | US 2011/304583 A1 (KRUGLICK EZEKIEL [US]) 15 December 2011 (2011-12-15) * paragraph [0004] - paragraph [0005] * * paragraph [0019] - paragraph [0028]; figures 1, 2 * | 1-4 | |
| A | US 2012/139865 A1 (KRAH CHRISTOPH HORST [US] ET AL) 7 June 2012 (2012-06-07) * paragraph [0006] - paragraph [0009]; figures 3, 9A-9B * | 1-4 | TECHNICAL FIELDS SEARCHED (IPC) |
| A | WO 2012/169981 A2 (DATCA SIGORTA ARACILIK HIZMETLERI LTD SIRKETI [TR]; COLAKOGLU OSMAN [T] 13 December 2012 (2012-12-13) * page 9, line 27 - page 11, line 12 * | 1-4 | G06F H04W H04B H04N |
| A | US 2013/278540 A1 (YILMAZ ESAT [US]) 24 October 2013 (2013-10-24) * paragraph [0027] - paragraph [0037]; figures 5, 6 * | 1-4 | |
| A | WO 2013/135004 A1 (ZTE CORP [CN]; HUANG HAI [CN]; WU HONGCHAO [CN]) 19 September 2013 (2013-09-19) * abstract * | 1-4 | |

The present search report has been drawn up for all claims

| Place of search | Date of completion of the search | Examiner |
|---|---|---|
| The Hague | 15 September 2017 | Bijn, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 267 292 A1

## ANNEX TO THE EUROPEAN SEARCH REPORT
## ON EUROPEAN PATENT APPLICATION NO.

EP 17 18 1805

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2017

| Patent document cited in search report | | Publication date | Patent family member(s) | | Publication date |
|---|---|---|---|---|---|
| EP 2107771 | A1 | 07-10-2009 | CN 101552806 A | | 07-10-2009 |
| | | | EP 2107771 A1 | | 07-10-2009 |
| | | | JP 2009253478 A | | 29-10-2009 |
| | | | US 2009251339 A1 | | 08-10-2009 |
| US 2013147760 | A1 | 13-06-2013 | CN 103150066 A | | 12-06-2013 |
| | | | DE 102012222409 A1 | | 13-06-2013 |
| | | | TW 201324299 A | | 16-06-2013 |
| | | | US 2013147760 A1 | | 13-06-2013 |
| US 2011304583 | A1 | 15-12-2011 | CN 102725717 A | | 10-10-2012 |
| | | | JP 5725672 B2 | | 27-05-2015 |
| | | | JP 2013527510 A | | 27-06-2013 |
| | | | KR 20120102744 A | | 18-09-2012 |
| | | | US 2011304583 A1 | | 15-12-2011 |
| | | | WO 2011155939 A1 | | 15-12-2011 |
| US 2012139865 | A1 | 07-06-2012 | NONE | | |
| WO 2012169981 | A2 | 13-12-2012 | DK 2715484 T3 | | 23-03-2015 |
| | | | EP 2715484 A2 | | 09-04-2014 |
| | | | ES 2532590 T3 | | 30-03-2015 |
| | | | PT 2715484 E | | 16-03-2015 |
| | | | TR 201105036 A2 | | 21-10-2011 |
| | | | US 2014285421 A1 | | 25-09-2014 |
| | | | WO 2012169981 A2 | | 13-12-2012 |
| US 2013278540 | A1 | 24-10-2013 | DE 202012103377 U1 | | 24-09-2012 |
| | | | US 2013278540 A1 | | 24-10-2013 |
| WO 2013135004 | A1 | 19-09-2013 | CN 102662538 A | | 12-09-2012 |
| | | | EP 2813928 A1 | | 17-12-2014 |
| | | | US 2015038078 A1 | | 05-02-2015 |
| | | | WO 2013135004 A1 | | 19-09-2013 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61922129 A
- US 20110304583 A
- US 20130147760 A
- CN 102916729 A